# EUROPÄISCHE PATENTSCHRIFT

(11) **EP 3 589 934 B1**
(45) Veröffentlichungstag und Bekanntmachung des Hinweises auf die Patenterteilung: **20.08.2025**
(21) Anmeldenummer: 18711024.2
(22) Anmeldetag: 27.02.2018
(51) Int. Cl.: G01N 21/25, G01N 21/51, G01N 21/94, A47L 15/42, D06F 39/00, G01N 21/84, D06F 34/22, D06F 103/20, D06F 105/42, D06F 105/62

(54) **VERFAHREN ZUR OPTISCHEN UNTERSUCHUNG EINER FLÜSSIGKEIT UND WASCHMASCHINE MIT EINEM LAUGENBEHÄLTER UND EINER VORRICHTUNG ZUR OPTISCHEN UNTERSUCHUNG EINER PARTIKEL ENTHALTENDEN WASCHLAUGE**
METHOD FOR THE OPTICAL EXAMINATION OF A LIQUID AND WASHING MACHINE WITH A SUDS CONTAINER AND A DEVICE FOR THE OPTICAL EXAMINATION OF SUDS CONTAINING PARTICLES
PROCÉDÉ D'EXAMEN OPTIQUE D'UN LIQUIDE ET MACHINE À LAVER COMPRENANT UN RÉSERVOIR DE LESSIVE ET UN DISPOSITIF D'EXAMEN OPTIQUE D'UNE LESSIVE CONTENANT DES PARTICULES

(30) Priorität: 28.02.2017 DE 102017001821
(43) Veröffentlichungstag der Anmeldung: 08.01.2020
(73) Patentinhaber: Marquardt GmbH, 78604 Rietheim-Weilheim (DE)
(72) Erfinder: REIDINGER, Lukas, 78665 Frittlingen (DE); AICHELE, Immanuel, 78166 Donaueschingen (DE)
(74) Vertreter: Staeger & Sperling Partnerschaftsgesellschaft mbB
(86) Internationale Anmeldenummer: PCT/EP2018/054729
(87) Internationale Veröffentlichungsnummer: WO 2018/158209

(56) Entgegenhaltungen:
- US-A- 4 406 028
- US-A1- 2007 046 942

## Beschreibung

Die Erfindung betrifft ein Verfahren zur optischen Untersuchung einer Partikel enthaltenden Waschlauge nach dem Oberbegriff des Patentanspruchs 1.

In der Druckschrift US 4,406,028 A ist eine Waschmaschine und ein Verfahren mit verschiedenen Sensoren zur Farberfassung einer Waschlauge bekannt geworden. In der Druckschrift US 2007/0046942 A1 ist eine derartige Waschmaschine und ein Verfahren mit einem Multiband-Farbsensor offenbart.

Ein derartiges Verfahren lässt sich in einer Waschmaschine zur optischen Untersuchung der Waschlauge verwenden.

Bei einem solchen Verfahren zur optischen Untersuchung einer Partikel enthaltenden Flüssigkeit wird von einer Lichtquelle ausgesandtes Licht in die Flüssigkeit eingekoppelt. Wenigstens ein Teil des eingekoppelten Lichts wird von den Partikeln in der Flüssigkeit reflektiert. Solches von den Partikeln reflektiertes Licht wird aus der Flüssigkeit ausgekoppelt. Wenigstens ein Teil des ausgekoppelten, reflektierten Lichts wird dann von einem Empfänger aufgenommen. Bisher wird lediglich die Intensität des aufgenommenen Lichts ausgewertet, anhand derer dann gewisse Feststellungen zur Trübung der Flüssigkeit ermöglicht sind.

Der Erfindung liegt die Aufgabe zugrunde, ein Verfahren nach dem Oberbegriff des Anspruchs 1 und eine Waschmaschine nach dem Oberbegriff des Anspruchs 3 dahingehend zu verbessern, dass der Aufbau der Waschmaschine und deren Steuerung optimiert werden.

Diese Aufgabe wird bei einem Verfahren gemäß dem Anspruch 1 und der Waschmaschine gemäß dem Anspruch 3 durch die jeweils kennzeichnenden Merkmale gelöst. Beim erfindungsgemäßen Verfahren wird das vom Empfänger aufgenommene Licht einer Spektralanalyse unterzogen. Die Spektralanalyse kann insbesondere hinsichtlich der im aufgenommenen Licht enthaltenen Farbanteile erfolgen. Und zwar kann dadurch insbesondere die Verfärbung der Waschlauge gemessen werden. Weitere Ausgestaltungen der Erfindung sind Gegenstand der Unteransprüche.

Zwecks umfassender Analyse kann es sich bei dem von der Lichtquelle ausgesandten Licht um sichtbares weißes Licht handeln.

Erfindungsgemäß werden in der Spektralanalyse der Rotlicht-Anteil, der Grünlicht-Anteil und der Blaulicht-Anteil des vom Empfänger aufgenommenen Lichts bereitgestellt, so dass Verfärbungen präzise erkennbar sind. Erfindungsgemäß werden aus der Spektralanalyse des vom Empfänger aufgenommenen Lichts die Trübung der Waschlauge ermittelt.

Hierfür wird die NTU(Nephelometric Turbidity Unit)-Kennlinie ermittelt.

Die Erfindung stellt weiterhin eine Waschmaschine mit einer Vorrichtung zur optischen Untersuchung einer Partikel enthaltenden Waschlauge, und zwar insbesondere einer mittels eines solchen Verfahrens betriebenen Vorrichtung, entsprechend Anspruch 3 bereit.

Die Vorrichtung umfasst eine Lichtquelle zur Aussendung von Licht in die Waschlauge sowie einen Empfänger zur Aufnahme von Licht, das von den Partikeln in der Waschlauge reflektiert wird, sowie einen Mikroprozessor.

Erfindungsgemäß umfasst der Empfänger einen Farbsensor. Der Farbsensor dient dabei zur selektive spektralen Erfassung des von den Partikeln in der Waschlauge reflektierten Lichts und misst eine Rotlicht-Anteil und einen Grünlicht-Anteil und einen Blaulicht-Anteil und leitet ihn an den Mikroprozessor weiter. Die Lichtquelle, der Empfänger und der Mikroprozessor sind auf einer Leiterplatte angeordnet, welche an einem lichtdurchlässigen Fenster und/ oder an einer Öffnung des Laugenbehälters der Waschmaschine vorgesehen ist. Der Mikroprozessor ist ausgebildet, das vom Empfänger aufgenommene von den Partikeln reflektierte Licht einer Spektralanalyse hinsichtlich der darin enthaltenen Farbanteile zu unterziehen und einen Rotlicht-Anteil, einen Grünlicht-Anteil und einen Blaulicht-Anteil des vom Empfänger aufgenommenen und von den Partikeln reflektierten Lichts als eine Verfärbung der Waschlauge zu ermitteln. Des Weiteren ist der Mikroprozessor dazu ausgebildet, aus der Spektralanalyse des vom Empfänger aufgenommenen und von den Partikeln reflektierten Lichts eine NTU (Nephelometric Turbidity Unit)-Kennlinie als eine Trübung der Waschlauge zu ermitteln, sowie die Farbanteile und die Trübung einer Steuerung der Waschmaschine als vier Ausgangssignale bereitzustellen, welche den Rotlicht-Anteil, den Grünlicht-Anteil und den Blaulicht-Anteil sowie die NTU-Kennlinie wiedergeben.

In weiterer Ausgestaltung der Vorrichtung kann es sich bei der Lichtquelle um ein vom menschlichen Auge sichtbares weißes Licht aussendendes Leuchtmittel handeln. Zwecks Einsparung von Energie kann eine Leuchtdiode als Leuchtmittel verwendet werden. Zur präzisen Erkennung von Verfärbungen misst der Farbsensor den Rotlicht-Anteil und den Grünlicht-Anteil und den Blaulicht-Anteil des von den Partikeln in der Waschlauge reflektierten Lichts. In einfacher Art und Weise werden der gemessene Rotlicht-Anteil und Grünlicht-Anteil und Blaulicht-Anteil an einen Mikroprozessor zur weiteren Auswertung übermittelt.

In kompakter Bauart sind die Lichtquelle, der Empfänger mit dessen Farbsensor und der Mikroprozessor auf einer Leiterplatte in der Art einer Sensoreinheit angeordnet.

In einfacher Art und Weise kann die Sensoreinheit zur Anordnung an einem lichtdurchlässigen Fenster und/oder an einer Öffnung eines Behälters, insbesondere eines Laugenbehälters in einer Waschmaschine, vorgesehen sein.

Die Waschmaschine, welche im Weiteren auch als Reinigungsgerät bezeichnet wird, kann zudem ein Steuergerät zur Durchführung des Behandlungsprozesses umfassen. Des Weiteren weist das Reinigungsgerät einen Behälter zur Aufnahme einer Reinigungsflüssigkeit auf. wobei die Reinigungsflüssigkeit Partikel, beispielsweise während des Behandlungsprozesses anfallende Färb- und/oder Schmutzpartikel, enthält. Schließlich ist am und/oder im Behälter, beispielsweise an einer Öffnung des Behälters, an einem lichtdurchlässigen Fenster des Behälters o. dgl., eine Vorrichtung zur optischen Untersuchung der Reinigungsflüssigkeit angeordnet. Diese Vorrichtung kann wie oben beschrieben näher ausgebildet sein. Mit Hilfe dieser Vorrichtung ist die Verfärbung der Reinigungsflüssigkeit und/oder die Trübung der Reinigungsflüssigkeit detektierbar. Erfindungsgemäß stellt die Vorrichtung zur optischen Untersuchung der Reinigungsflüssigkeit den Messwert für den Rotlicht-Anteil und den Grünlicht-Anteil und den Blaulicht-Anteil und für die Trübung bereit.

Des Weiteren ist der Messwert für den Rotlicht-Anteil und den Grünlicht-Anteil und den Blaulicht-Anteil und für die Trübung an das Steuergerät weiterleitbar, so dass mit Hilfe dieses Messwertes das Steuergerät den Behandlungsprozess in effektiver Art und Weise steuern kann.

Bei dem Reinigungsgerät handelt es sich um eine Waschmaschine, sowie bei den Gegenständen um Wäsche o. dgl.

Bei der Reinigungsflüssigkeit kann es sich um Wasser, das gegebenenfalls mit Waschmittel versehen ist, handeln. Bei Feststellung einer Verfärbung kann dann der Behandlungsprozess vom Steuergerät abgebrochen werden, um eine Beschädigung der zu behandelnden Gegenstände zu verhindern. Bei Feststellung einer zu großen Trübung der Reinigungsflüssigkeit kann es sich anbieten, dass das Steuermittel die Nachdosierung von weiterem Waschmittel und/oder einen weiteren Spülvorgang mit klarem Wasser veranlasst, um so ein verbessertes Reinigungsergebnis zu erzielen.

Für eine besonders bevorzugte Ausgestaltung des erfindungsgemäßen Verfahrens und der zugehörigen Vorrichtung ist nachfolgendes festzustellen. Geschaffen ist die Farberkennung von Farbpartikeln und/oder Schmutzpartikeln enthaltenden Waschlauge in einer Waschmaschine. Dabei wird noch zusätzlich eine integrierte Trübungserkennung vorgenommen.

Die hierfür geeignete Vorrichtung umfasst eine Reflexionsanordnung von optischen Bauelementen, wobei der von einer wählbaren Lichtquelle ausgekoppelte Strahl von den Partikeln in einer wässrigen Lösung reflektiert und von einem Farbsensor aufgenommen wird. Durch die Reflexion an den Partikeln verändert sich die Wellenlänge des ins Medium eingekoppelten Lichts in Abhängigkeit von der Farbe des Mediums. Eine alternative Wahl der Lichtquellen zur optimierten Abstimmung zwischen Empfängerlichtempfindlichkeit lässt hier ein optimiertes Signalverhalten zu. Dies stellt einen signifikanten Unterschied zu sonstigen Farbsensoren für die Weiße Ware dar, welche über annähernd monochromatische Lichtquellen einkoppeln und nur breitbandig den rückreflektierten Anteil messen.

Ein integrierter Mikroprozessor verarbeitet die erzeugten Signale und definiert an die Steuerung der Waschmaschine weitergeben. Es werden insgesamt vier Ausgangssignale bereitgestellt, und zwar:
1. der Rotlicht- Anteil,
2. der Grünlicht-Anteil,
3. der Blaulicht- Anteil, sowie
4. die NTU(Nephelometric Turbidity Unit)-Kennlinie.

Ermöglicht sind dadurch
- die Erkennung der Einfärbung von Waschlauge im Waschprozess einer Waschmaschine und/oder
- die Ermittlung des Regelparameters für eine optimierte Waschlaugendosierung und/oder
- die Erkennung einer eventuellen Verunreinigung von frisch eingelassenen Wasser und/oder
- die frühzeitige Erkennung von abfärbenden Waschstücken und/oder
- die Messung einer Trübungskennlinie im kritischen unteren Trübungsbereich und/oder
- die Bereitstellung von einfach interpretierbaren Messwerten und deren schnelle Einbindung in eine Waschmaschinenprozesssteuerung.

Die mit der Erfindung erzielten Vorteile bestehen insbesondere darin, dass eine Vermeidung von Verfärbungen der Kleidungsstücke beim Waschvorgang ermöglicht ist. Weiter kann ein optimierter Einsatz von Waschmitteln mittels eines Waschmitteldosiersystems vorgenommen werden. Schließlich ist auch eine verbesserte Erkennung der Eintrübung von Waschlaugen, insbesondere zusätzlich zur Erkennung der Verfärbung, und/oder eine verbesserte Auflösung bei der Messung der Trübung ermöglicht.

Ein Ausführungsbeispiel der Erfindung mit verschiedenen Weiterbildungen und Ausgestaltungen ist in den Zeichnungen dargestellt und wird im Folgenden näher beschrieben. Es zeigen
- Fig. 1: eine Vorrichtung zur optischen Untersuchung einer Waschlauge in schematischer Ansicht,
- Fig. 2: die Anordnung der Vorrichtung aus Fig. 1 am Laugenbehälter einer Waschmaschine und
- Fig. 3: ein eine Vorrichtung aus Fig. 2 aufweisendes Reinigungsgerät in schematischer Ansicht.

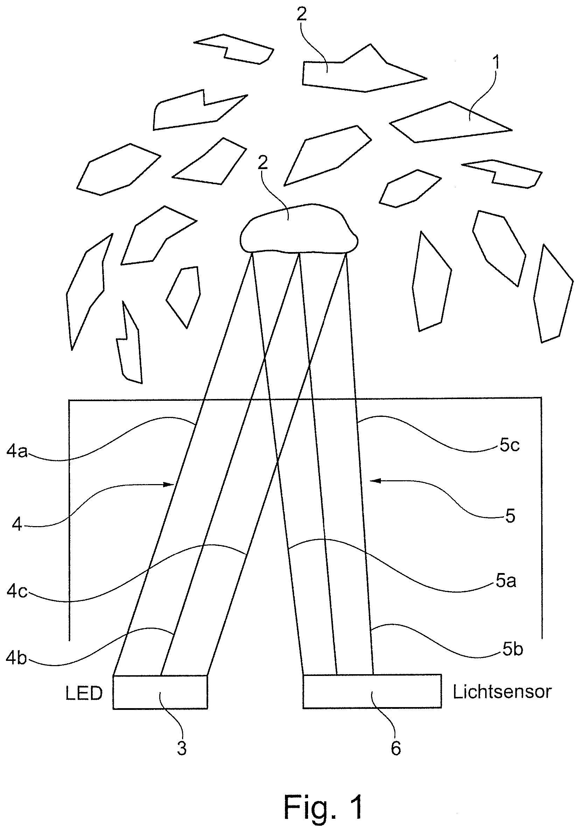

In Fig. 1 ist schematisch eine Vorrichtung zur optischen Untersuchung einer Partikel 2, beispielsweise Färb- und/oder Schmutzpartikel 2, enthaltenden Waschlauge 1 zu sehen, wobei die Waschlauge 1 im Weiteren auch als Flüssigkeit 1 bezeichnet wird. Von einer Lichtquelle 3 wird Licht 4 ausgesandt. Dieses Licht 4 wird in die Flüssigkeit 1 eingekoppelt. Trifft das Licht 4 auf ein Partikel 2, so wird ein Teil dieses Lichts 4 reflektiert, während ein weiterer Teil dieses Lichts 4 vom Partikel 2 absorbiert werden kann. Das von den Partikeln 2 reflektierte Licht 5 wird aus der Flüssigkeit 1 ausgekoppelt. Wenigstens ein Teil des ausgekoppelten, reflektierten Lichts 5 wird dann von einem Empfänger 6 aufgenommen. Das vom Empfänger 6 aufgenommene Licht 5 wird dann einer Spektralanalyse unterzogen. Mit Hilfe der Spektralanalyse sind die im aufgenommenen reflektierten Licht 5 enthaltenen Farbanteile ermittelbar, so dass die durch die Farb- und/oder Schmutzpartikel 2 bewirkte Verfärbung und/oder Verschmutzung der Flüssigkeit 1 gemessen wird.

Bei der Lichtquelle 3 kann es sich um eine Leuchtdiode (LED) handeln. Bevorzugterweise wird ein Leuchtmittel als Lichtquelle 3 gewählt, das sichtbares weißes Licht 4 aussendet. Das weiße Licht 4 setzt sich dann aus den entsprechenden Anteilen von rotem Licht 4a, grünem Licht 4b und blauem Licht 4c zusammen. Entsprechend der Farbe der Partikel 2 enthält das reflektierte Licht 5 einen korrespondierenden Rotlicht-Anteil 5a und/oder Grünlicht- Anteil 5b und/oder Blaulicht- Anteil 5c. In der Spektralanalyse des vom Empfänger 6 aufgenommenen Lichts 5 wird dann der Rotlicht-Anteil 5a und/oder der Grünlicht-Anteil 5b und/oder der Blaulicht-Anteil 5c bereitgestellt. Zweckmäßigerweise handelt es sich dann bei dem Empfänger 6 um einen Farbsensor beziehungsweise der Empfänger 6 umfasst einen Farbsensor, wobei der Farbsensor die entsprechende Anteile 5a, 5b, 5c misst. Der Farbsensor 6 dient somit insbesondere zur selektiven spektralen Erfassung des von den Partikeln 2 in der Flüssigkeit 1 reflektierten Lichts 5.

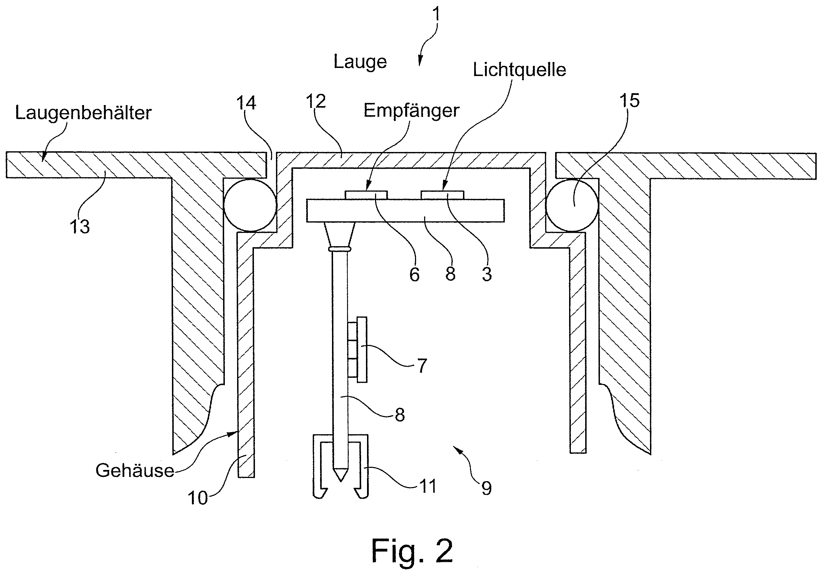

Zur weiteren Auswertung werden der gemessene Rotlicht- Anteil 5a und/oder Grünlicht- Anteil 5b und/oder Blaulicht-Anteil 5c beziehungsweise die entsprechenden Signale des Empfängers 6 an einen in Fig. 2 gezeigten Mikroprozessor 7 übermittelt. Im Mikroprozessor 7 kann aus der Spektralanalyse des vom Empfänger 6 aufgenommenen Lichts 5 zusätzlich die Trübung der Flüssigkeit 1 ermittelt werden. Die Trübung wird als sogenannte NTU(Nephelometric Turbidity Unit)-Kennlinie bereitgestellt.

Die Vorrichtung zur optischen Untersuchung einer Partikel 2 enthaltenden Flüssigkeit 1 ist näher in Fig. 2 zu sehen. Die Vorrichtung umfasst das Leuchtmittel 3 als Lichtquelle zur Aussendung von Licht 4 in die Flüssigkeit 1 und den Farbsensor 6 als Empfänger zur Aufnahme von Licht 5, das von den Partikeln 2 in der Flüssigkeit 1 reflektiert wird, sowie gegebenenfalls den Mikroprozessor 7. Das Leuchtmittel 3 und/oder der Farbsensor 6 beziehungsweise der Empfänger 6 und/oder der Mikroprozessor 7 sind auf einer Leiterplatte 8, 8' in der Art einer Sensoreinheit 9 angeordnet. Die Sensoreinheit 9 weist ein Gehäuse 10 und einen Steckanschluss 1 1 zur elektrischen Verbindung der Sensoreinheit 9 auf. Des Weiteren besitzt das Gehäuse 10 ein lichtdurchlässiges Fenster 12, das dem Leuchtmittel 3 und dem Farbsensor 6 zugeordnet ist.

Wie bereits erwähnt, kann die Sensoreinheit 9 zur Farberkennung der Waschlauge 1 im Laugenbehälter 13 einer Waschmaschine verwendet werden. Hierzu wird die Sensoreinheit 9 in einer Öffnung 14 des Laugenbehälters 13 so angeordnet, dass das Licht 4, 5 durch das Fenster 12 in die Waschlauge 1 eingekoppelt sowie aus der Waschlauge 1 ausgekoppelt werden kann. Dabei ist das Gehäuse 10 der Sensoreinheit 9 mittels einer Dichtung 15 in der Öffnung 14 montiert. Anstelle einer Öffnung 14 im Laugenbehälter 13 kann auch ein Fenster im Laugenbehälter 13 vorgesehen sein, an dem die Sensoreinheit 9 angeordnet ist, was jedoch nicht weiter gezeigt ist.

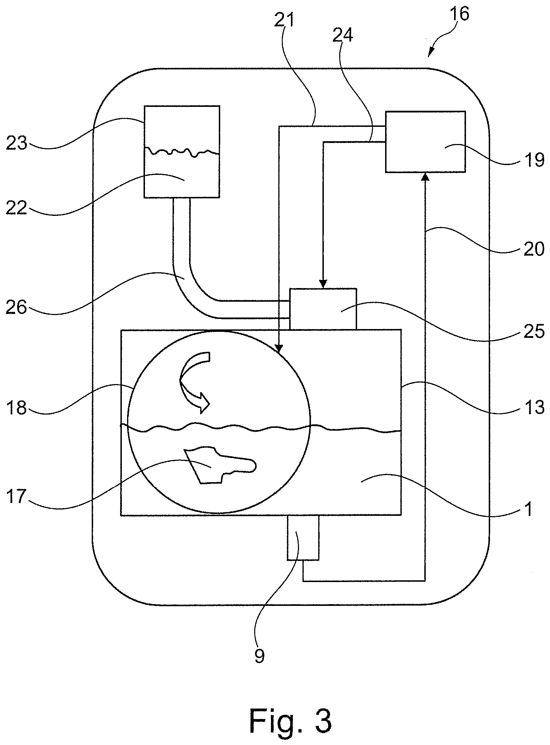

In Fig. 3 ist in schematischer Ansicht ein Reinigungsgerät 16, bei dem es sich vorliegend um eine Waschmaschine handelt, zur Behandlung von Wäsche 17 näher zu sehen. Das Reinigungsgerät 16 weist eine mittels eines Motors drehbare Trommel 18 zur Aufnahme der Wäsche 17 auf. Die Trommel 1 8 ist in einem Behälter 13 zur Aufnahme einer Reinigungsflüssigkeit 1, bei der es sich um mit Waschmittel versetztes Wasser und/oder klares Wasser handelt, angeordnet, so dass die Reinigungsflüssigkeit 1 die Trommel 18 durchsetzt.

Weiter weist das Reinigungsgerät 16 ein Steuergerät 19 zur Durchführung des Behandlungsprozesses für die Wäsche 17 auf, wobei das Steuergerät 19 unter anderem den Motor zur Drehung der Trommel 1 8 entsprechend dem Waschprogramm ansteuert. Aufgrund des Behandlungsprozesses, d.h. des Waschvorgangs, enthält die Reinigungsflüssigkeit 1, wie in Fig. I gezeigt, Partikel 2. Am und/oder im Behälter 13 ist die in Fig. 2 näher dargestellte Sensoreinheit 9 als Vorrichtung zur optischen Untersuchung der Reinigungsflüssigkeit 1 angeordnet. Mit Hilfe der Sensoreinheit 9 ist die Verfärbung der Reinigungsflüssigkeit 1 und/oder die Trübung der Reinigungsflüssigkeit 1 mess- und/oder detektierbar.

Wie bereits anhand von Fig. 1 beschrieben stellt die Sensoreinheit 9 den Messwert 20 für den Rotlicht-Anteil 5a und/oder den Grünlicht-Anteil 5b und/oder den Blaulicht-Anteil 5c und/oder für die Trübung bereit. Der Messwert 20 für den Rotlicht-Anteil a und/oder den Grünlicht- Anteil 5b und/oder den Blaulicht-Anteil 5c und/oder für die Trübung wird von der Sensoreinheit 9 an das Steuergerät 19 zur Verwendung für die Steuerung des Behandlungsprozesses weitergeleitet. Der Messwert 20 wird dann im Steuergerät 19 im Hinblick auf den jeweiligen Behandlungsprozess ausgewertet. So kann bei Feststellung einer Verfärbung der Reinigungsflüssigkeit 1 der Behandlungsprozess abgebrochen werden, um einen Schaden an der Wäsche 17 zu verhindern. Zu diesem Zweck sendet das Steuergerät 19 ein Abbruchsignal 21, welches den Motor für die Drehung der Trommel 18 abschaltet. Bei Feststellung einer zu großen Trübung der Reinigungsflüssigkeit 1 kann beispielsweise flüssiges Waschmittel 22, welches sich in einem Vorratsbehälter 23 befindet, nachdosiert werden. Hierzu steuert das Steuergerät 19 eine Dosierpumpe 25 mittels eines Pumpensignals 24 an, so dass die Dosierpumpe 25 zusätzliches Waschmittel 22 aus dem Vorratsbehälter 23 über eine Zuleitung 26 in den Behälter 13 in der gewünschten Menge fördert.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung.

## Patentansprüche

1. Verfahren zur optischen Untersuchung einer Partikel (2) enthaltenden Waschlauge (1) in einer Waschmaschine mit einer eine Lichtquelle (3) und einen Empfänger (6) umfassenden Sensoreinheit (9),
wobei von der Lichtquelle (3) ausgesandtes Licht (4) in die Waschlauge (1) eingekoppelt wird,
wobei von den Partikeln (2) reflektiertes Licht (5) aus der Waschlauge (1) ausgekoppelt wird,
und wobei wenigstens ein Teil des ausgekoppelten, reflektierten Lichts (5) von einem Empfänger (6) aufgenommen wird,
**dadurch gekennzeichnet, dass**
das vom Empfänger (6) aufgenommene Licht (5) durch einen Mikroprozessor einer Spektralanalyse hinsichtlich der darin enthaltenen Farbanteile, unterzogen und ein Rotlicht-Anteil (5a), ein Grünlicht-Anteil (5b) und ein Blaulicht-Anteil (5c) des vom Empfänger (6) aufgenommenen Lichts (5) ermittelt wird, derart dass die Verfärbung der Waschlauge (1) gemessen wird,
sowie aus der Spektralanalyse des vom Empfänger (6) aufgenommenen Lichts (5) durch den Mikroprozessor eine NTU (Nephelometric Turbidity Unit)-Kennlinie als eine Trübung der Waschlauge (1) ermittelt wird,
wobei die Farbanteile und die Trübung einer Steuerung der Waschmaschine als vier Ausgangssignale bereitgestellt werden, welche den Rotlicht-Anteil (5a), den Grünlicht-Anteil (5b) und den Blaulicht-Anteil (5c) sowie die NTU-Kennlinie wiedergeben.

2. Verfahren zur optischen Untersuchung einer Partikel (2) enthaltenden Waschlauge (1) nach Anspruch 1, **dadurch gekennzeichnet, dass** es sich bei dem von der Lichtquelle (3) ausgesandten Licht (4) um sichtbares weißes Licht handelt.

3. Waschmaschine mit einem Laugenbehälter (13) und einer Vorrichtung zur optischen Untersuchung einer Partikel (2) enthaltenden Waschlauge (1)
mit einer eine Lichtquelle (3), einen Empfänger (6) und einen Mikroprozessor (7) umfassenden Sensoreinheit (9),
wobei die Lichtquelle (3) zur Aussendung von Licht (4) in die Waschlauge (1) vorgesehen ist,
wobei der Empfänger (6) zur Aufnahme von Licht (5), das von den Partikeln (2) in der Waschlauge (1) reflektiert wird, vorgesehen ist,
und wobei der Empfänger (6) einen Farbsensor zur selektiven spektralen Erfassung des von den Partikeln (2) in der Waschlauge (1) reflektierten Lichts (5) umfasst, welcher einen Rotlicht-Anteil (5a) und einen Grünlicht-Anteil (5b) und einen Blaulicht-Anteil (5c) des von den Partikeln (2) in der Waschlauge (1) reflektierten Lichts (5) zu messen und an den Mikroprozessor (7) zur Auswertung zu übermitteln,
wobei die Lichtquelle (3), der Empfänger (6) mit dem Farbsensor (6) und der Mikroprozessor (7) auf einer Leiterplatte (8, 8') angeordnet sind, welche an einem lichtdurchlässigen Fenster und/oder an einer Öffnung (14) des Laugenbehälters (13) der Waschmaschine vorgesehen ist,
**dadurch gekennzeichnet, dass**
der Mikroprozessor ausgebildet ist,
das vom Empfänger (6) aufgenommene von den Partikeln (2) reflektierte Licht (5) einer Spektralanalyse hinsichtlich der darin enthaltenen Farbanteile zu unterziehen und einen Rotlicht-Anteil (5a), einen Grünlicht-Anteil (5b) und einen Blaulicht-Anteil (5c) des vom Empfänger (6) aufgenommenen und von den Partikeln (2) reflektierten Lichts (5) als eine Verfärbung der Waschlauge (1) zu ermitteln,
aus der Spektralanalyse des vom Empfänger (6) aufgenommenen und von den Partikeln (2) reflektierten Lichts (5) eine NTU (Nephelometric Turbidity Unit)-Kennlinie als eine Trübung der Waschlauge (1) zu ermitteln,
sowie die Farbanteile und die Trübung einer Steuerung der Waschmaschine als vier Ausgangssignale bereitzustellen, welche den Rotlicht-Anteil (5a), den Grünlicht-Anteil (5b) und den Blaulicht-Anteil (5c) sowie die NTU-Kennlinie wiedergeben.

4. Waschmaschine nach dem vorhergehenden Anspruch,
die Sensoreinheit (9) ein Gehäuse (10) aufweist, das an einem Fenster in dem Laugenbehälter (13) oder mittels einer Dichtung (15) in einer Öffnung (14) des Laugenbehälters (13) montiert ist.

5. Waschmaschine nach Anspruch 3 oder 4, **dadurch gekennzeichnet, dass** es sich bei der Lichtquelle (3) um ein sichtbares weißes Licht aussendendes Leuchtmittel handelt.

6. Waschmaschine nach dem vorhergehenden Anspruch,
wobei das Leuchtmittel eine Leuchtdiode ist.

7. Waschmaschine nach einem der Ansprüche 3 bis 6, **dadurch gekennzeichnet, dass** das Steuergerät (19) bei Feststellung einer Verfärbung für einen Abbruch des Behandlungsprozesses und/oder bei Feststellung einer zu großen Trübung für eine Nachdosierung von Waschmittel (22) ausgebildet ist.

## Claims

1. A method for the optical examination of suds (1) containing particles (2) in a washing machine with a sensor unit (9) comprising a light source (3) and a receiver (6),
wherein light (4) emitted by the light source (3) is coupled into the suds (1),
wherein light (5) reflected by the particles (2) is decoupled from the suds (1),
and wherein at least a part of the decoupled, reflected light (5) is received by a receiver (6),
**characterized in that**
the light (5) received by the receiver (6) is subjected to a spectral analysis through a microprocessor with regard to the colour components contained therein and a red light component (5a), a green light component (5b) and a blue light component (5c) of the light (5) received by the receiver (6) is determined such that the colouring of the suds (1) is measured,
and an NTU (Nephelometric Turbidity Unit) characteristics is determined as a turbidity of the suds (1) from the spectral analysis of the light (5) received by the receiver (6) through the microprocessor,
wherein the colour components and the turbidity are provided to a controller of the washing machine as four output signals which reflect the red light component (5a), the green light component (5b) and the blue light component (5c) as well as the NTU characteristics.

2. The method for the optical examination of suds (1) containing particles (2) according to claim 1, **characterized in that** the light (4) emitted by the light source (3) is visible white light.

3. A washing machine with a suds container (13) and a device for the optical examination of suds (1) containing particles (2) with a sensor unit (9) comprising a light source (3), a receiver (6) and a microprocessor (7),
wherein the light source (3) is provided for emitting light (4) into the suds (1),
wherein the receiver (6) is provided for receiving light (5) reflected by the particles (2) in the suds (1),
and wherein the receiver (6) comprises a colour sensor for the selective spectral detection of the light (5) reflected by the particles (2) in the suds (1), which to measure a red light component (5a) and a green light component (5b) and a blue light component (5c) of the light (5) reflected by the particles (2) in the suds (1) and to transmit to the microprocessor (7) for evaluation,
wherein the light source (3), the receiver (6) with the colour sensor (6) and the microprocessor (7) are arranged on a printed circuit board (8, 8') which is provided at a translucent window and/or at an opening (14) of the suds container (13) of the washing machine,
**characterized in that**
the microprocessor is formed
to subject the light (5) received by the receiver (6) and reflected by the particles (2) to a spectral analysis with regard to the colour components contained therein and to determine a red light component (5a), a green light component (5b) and a blue light component (5c) of the light (5) received by the receiver (6) and reflected by the particles (2) as a colouring of the suds (1),
to determine an NTU (Nephelometric Turbidity Unit) characteristics as a turbidity of the suds (1) from the spectral analysis of the light (5) received by the receiver (6) and reflected by the particles (2),
as well as to provide the colour components and the turbidity to a controller of the washing machine as four output signals which reflect the red light component (5a), the green light component (5b) and the blue light component (5c) as well as the NTU characteristics.

4. The washing machine according to the preceding claim,
the sensor unit (9) has a housing (10) which is mounted on a window in the suds container (13) or in an opening (14) of the suds container (13) by means of a sealing (15).

5. The washing machine according to claim 3 or 4, **characterized in that** the light source (3) is an illuminant emitting visible white light.

6. The washing machine according to the preceding claim,
wherein the illuminant is a light emitting diode.

7. The washing machine according to any one of claims 3 to 6, **characterized in that** the controller device (19) is formed to interrupt the treatment process when a colouring is determined and/or for subsequent dosing of detergent (22) if too much turbidity is detected.

## Revendications

1. Procédé d'examen optique d'une lessive (1) contenant des particules (2) dans une machine à laver avec une unité de détection (9) comprenant une source lumineuse (3) et un récepteur (6),
dans lequel la lumière (4) émise par la source lumineuse (3) est couplée à la lessive (1),
dans lequel la lumière (5) réfléchie par les particules (2) est couplée hors lessive (1),
et dans lequel au moins une partie de la lumière réfléchie couplée (5) est reçue par un récepteur (6),
**caractérisé en ce que**
la lumière (5) reçue par le récepteur (6) est soumise à une analyse spectrale par un microprocesseur en ce qui concerne les composantes de couleur qu'elle contient, et une composante de lumière rouge (5a), une composante de lumière verte (5b) et une composante de lumière bleue (5c) de la lumière (5) reçue par le récepteur (6) sont déterminées, de telle sorte que la décoloration de lessive (1) est mesurée,
et à partir de l'analyse spectrale de la lumière (5) reçue par le récepteur (6) par le microprocesseur, une courbe caractéristique NTU (Nephelometric Turbidity Unit) est déterminée comme une turbidité de la lessive (1),
dans lequel les composants de couleur et la turbidité sont fournis à une commande de la machine à laver sous forme de quatre signaux de sortie qui représentent la composante de lumière rouge (5a), la composante de lumière verte (5b) et la composante de lumière bleue (5c) ainsi que la courbe caractéristique NTU.

2. Procédé d'examen optique d'une lessive (1) contenant des particules (2) selon la revendication 1, **caractérisé en ce que** la lumière (4) émise par la source lumineuse (3) est une lumière blanche visible.

3. Machine à laver avec un réservoir de lessive (13) et un dispositif d'examen optique d'une lessive (1) contenant des particules (2) avec une unité de détection (9) comprenant une source lumineuse (3), un récepteur (6) et un microprocesseur (7),
dans laquelle la source lumineuse (3) est prévue pour émettre de la lumière (4) dans la lessive (1),
dans lequel le récepteur (6) est prévu pour recevoir la lumière (5) réfléchie par les particules (2) dans la lessive (1),
et dans laquelle le récepteur (6) comprend un capteur de couleur pour la détection spectrale sélective de la lumière (5) réfléchie par les particules (2) dans la lessive (1), lequel capteur de couleur mesure une composante de lumière rouge (5a), une composante de lumière verte (5b) et une composante de lumière bleue (5c) de la lumière (5) réfléchie par les particules (2) dans la lessive (1) et la transmet au microprocesseur (7) pour évaluation,
dans laquelle la source lumineuse (3), le récepteur (6) avec le capteur de couleur (6) et le microprocesseur (7) sont disposés sur une carte de circuit imprimé (8, 8') qui est prévue sur une fenêtre translucide et/ou sur une ouverture (14) du réservoir de lessive (13) de la machine à laver,
**caractérisée en ce que**
le microprocesseur est conçu pour
soumettre la lumière (5) réfléchie par les particules (2) et reçue par le récepteur (6) à une analyse spectrale en ce qui concerne les composantes de couleur qu'elle contient et pour déterminer une composante de lumière rouge (5a), une composante de lumière verte (5b) et une composante de lumière bleue (5c) de la lumière (5) reçue par le récepteur (6) et réfléchie par les particules (2) comme une décoloration de la lessive (1),
déterminer une courbe caractéristique NTU (Nephelometric Turbidity Unit) comme une turbidité de la lessive (1) à partir de l'analyse spectrale de la lumière (5) enregistrée par le récepteur (6) et réfléchie par les particules (2),
ainsi que pour fournir les composantes de couleur et la turbidité d'un système de commande de machine à laver sous forme de quatre signaux de sortie, qui représentent la composante de lumière rouge (5a), la composante de lumière verte (5b) et la composante de lumière bleue (5c) ainsi que la courbe caractéristique NTU.

4. Machine à laver selon la revendication précédente,
l'unité de capteur (9) comporte un boîtier (10) qui est monté sur une fenêtre dans le récipient à lessive (13) ou au moyen d'un joint (15) dans une ouverture (14) du récipient à lessive (13).

5. Machine à laver selon la revendication 3 ou 4, **caractérisée en ce que** la source lumineuse (3) est une lampe émettant une lumière blanche visible.

6. Machine à laver selon la revendication précédente,
dans laquelle la source lumineuse est une diode électroluminescente.

7. Machine à laver selon l'une quelconque des revendications 3 à 6, **caractérisée en ce que** le dispositif de commande (19) est conçu pour arrêter le processus de traitement en cas de détection d'une décoloration et/ou pour ajouter de la lessive supplémentaire (22) en cas de détection d'une turbidité excessive.
